# EUROPEAN PATENT APPLICATION

(11) **EP 4 707 073 A1**
(43) Date of publication of application: **11.03.2026**
(21) Application number: 25200366.0
(22) Date of filing: 04.09.2025
(51) Int. Cl.: B60Q 1/00, B60Q 1/18, B60Q 1/24, F21S 41/20, F21S 41/50

(54) **WORK VEHICLE**

(30) Priority: 06.09.2024 JP 2024153569
(71) Applicant: Yanmar Holdings Co., Ltd., Osaka-shi, Osaka (JP)
(72) Inventor: MATSUMOTO, Kunihiko, Okayama (JP); NOMOTO, Soshi, Okayama (JP); OSHIGE, Yoshiteru, Okayama (JP); OTOMO, Shogo, Osaka (JP); IKOMA, Aoi, Osaka (JP)
(74) Representative: Sekiguchi, Kazuya

(57) **Abstract**

[Problem] To provide a technique suitable for a work vehicle comprising a light capable of illuminating the front-lateral side of the work vehicle.

[Solution] A work vehicle (100) is provided, wherein the work vehicle (100) comprises a hood (5) and a light portion (70) disposed on each of right and left sides of a front side of the hood (5), and wherein each light portion (70) is U-shaped as viewed from a side of the work vehicle (100).

## Description

### TECHNICAL FIELD

The present invention relates to a work vehicle.

### BACKGROUND ART

Conventionally, a work vehicle in which a headlight is provided at a front end portion of a hood disposed in front of a driving operation unit is known. Among the work vehicles, there is also a work vehicle having a configuration in which a headlight that illuminates front and a work light that illuminates front-lateral side are provided in a front portion (for example, see Patent Document 1). In Patent Document 1, a configuration in which a headlight is disposed on the front of the work vehicle, and in which work lights are disposed on both the left and right sides of the headlight.

### PRIOR ART DOCUMENT

### PATENT DOCUMENT

Patent Document 1: Japanese Patent Laid-open Publication No. 2004-136865

### SUMMARY OF INVENTION

### TECHNICAL PROBLEM

The configuration in which the light that illuminates the side of the hood is provided has an advantage of improving the workability of work at night. However, when the side of the work vehicle is made brighter than necessary, for example, a pedestrian or the like walking on the side of the work vehicle may feel that the side of the work vehicle is too bright to move.

An object of the present invention is to provide a technique suitable for a work vehicle comprising a light capable of illuminating the front-lateral side of the work vehicle.

### SOLUTION TO PROBLEM

An example work vehicle according to the present invention comprises a hood and light portions disposed on right and left sides of a front side of the hood and having a U-shaped side view.

### ADVANTAGEOUS EFFECTS OF INVENTION

The exemplary present invention can provide a technique suitable for a work vehicle including a light capable of illuminating the front-lateral side of the work vehicle.

### BRIEF DESCRIPTION OF DRAWINGS

FIG. 1 is a left side view showing a schematic configuration of a tractor.
FIG. 2 is a perspective view showing a schematic configuration of a hood.
FIG. 3 is a front view showing a schematic configuration of a hood.
FIG. 4 is a left side view showing a schematic configuration of a hood.
FIG. 5 is a plan view showing a schematic configuration of a hood.
FIG. 6 is a schematic perspective view showing a plurality of hood members constituting a hood in an exploded manner.
FIG. 7 is a schematic view showing the relationship between an upper hood member and an exhaust gas purification device.
FIG. 8 schematically shows a configuration around an exhaust gas purification device.
FIG. 9 is a cross sectional perspective view showing the schematic relationship between an upper hood member and a left hood member.
FIG. 10 is a left side view showing a schematic relationship between a front hood member and an upper light portion.
FIG. 11 is a left side view showing a schematic configuration of a light unit constituting an upper light portion.
FIG. 12 is a perspective view showing a schematic configuration of a cross section taken at a position XII-XII in FIG. 10.

### DESCRIPTION OF EMBODIMENTS

Embodiments of the present invention will be described hereinafter with reference to the accompanying drawings.

A work vehicle according to an embodiment of the present invention is a tractor. However, this is merely an example. The present invention is widely applicable to a work vehicle other than a tractor that comprises a light on a hood. Such a work vehicle may be a work vehicle for farmwork other than a tractor, a work vehicle for civil engineering work or construction work, or the like.

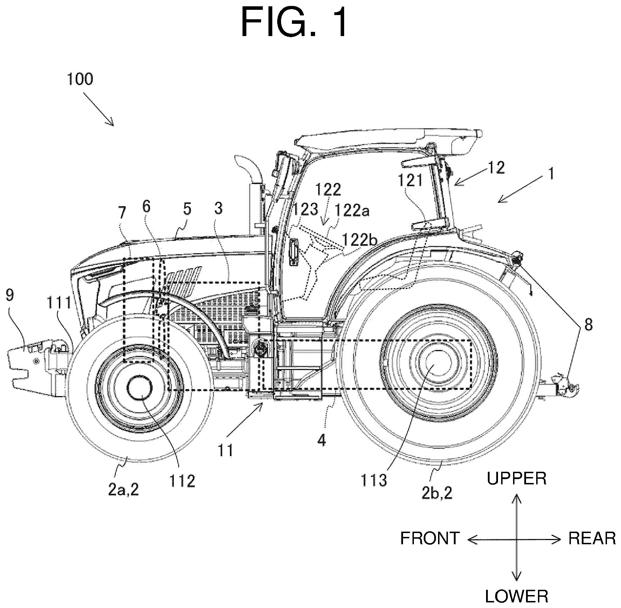

In the present specification, directions are defined as follows. First, a direction in which the tractor 100 (see the below FIG. 1) as the work vehicle travels during work is defined as "front" and a direction opposite to the front is defined as "rear". Further, the right side of the traveling direction of the tractor 100 during work is defined as right, and the left side is defined as left. A direction perpendicular to a front-rear direction and left-right direction of the tractor 100 is defined as an up-down direction. In this case, the gravity direction is a down direction, and the direction opposite to the down direction is defined as an up direction. Further, a plane perpendicular to the up-down direction is defined as a horizontal plane and a direction along the horizontal plane is defined as a horizontal direction. The directions described above are designations used merely for explanation, and are not intended to limit the actual positional relationships and directions.

### <Overview of Tractor>

FIG. 1 is a left side view of a schematic configuration of a tractor 100 according to an embodiment of the present invention. As illustrated in FIG. 1, the tractor 100 comprises a vehicle body 1, wheels 2, an engine 3, and a power transmission portion 4.

As illustrated in FIG. 1, the wheels 2 have front wheels 2a and rear wheels 2b. The front wheels 2a are disposed on left and right sides of a front side of the vehicle body 1. The rear wheels 2b are disposed on left and right sides of a rear side of the vehicle body 1. The vehicle body 1 is provided so as to be able to travel using the front wheels 2a and the rear wheels 2b. That is, the tractor 100 according to the present embodiment is a wheel-type tractor. However, the tractor 100 is not limited to the wheel-type tractor, but may also be a crawler-type tractor that travels using crawlers etc.

The engine 3 is disposed on the front side of the vehicle body 1 so as to be covered by a hood 5. According to the present invention, although the engine 3 is a diesel engine, the engine 3 may also be a gasoline engine or a hydrogen engine etc. The tractor 100 may be configured to comprise a prime mover other than the engine, such as a motor, instead of the engine 3.

Inside the hood 5, in addition to the engine 3, for example, a cooling fan 6 and a radiator 7 are disposed. The cooling fan 6 is disposed in front of the engine 3 and is driven by power supplied from the engine 3. The cooling fan 6 is surrounded by a fan shroud (partition plate) (not illustrated). The fan shroud divides the internal space of the hood 5 into front and rear spaces. The radiator 7 is disposed in front of the fan shroud. The fan shroud shields devices or components disposed in front of itself, such as the radiator 7, from heat from the engine 3. The rotation of the cooling fan 6 causes outside air having a relatively low temperature to be taken in from a front grill or the like on a front surface of the hood 5. Then, the taken outside air passes through the radiator 7 and the cooling fan 6 and is sent to the engine 3 side, and the engine 3 is cooled.

The power transmission portion 4 is disposed in rear of the engine 3. The power transmission portion 4 transmits power of the engine 3 to the wheels 2. Specifically, the power of the engine 3 is transmitted to at least one of the front wheels 2a and the rear wheels 2b via the power transmission portion 4. In the present embodiment, the power of the engine 3 is transmitted to the front wheels 2a and the rear wheels 2b via the power transmission portion 4. The power transmission portion 4 comprises a transmission case inside which a transmission is disposed. In addition to or instead of the transmission case, the power transmission portion 4 may have, for example, at least one of a power transmission shaft, a gear, a pulley, a belt, a chain, a speed reducer, and a case that accommodates such power transmission elements.

The vehicle body 1 has a base portion 11 to which the wheels 2 are attached, and a driving compartment 12 supported by the base portion 11.

The base portion 11 comprises, specifically, a base frame 111, a front axle 112, and a rear axle 113. The power is transmitted to the front axle 112 and the rear axle 113 from the power transmission portion 4. To the front axle 112, the front wheels 2a are attached. To the rear axle 113, the rear wheels 2b are attached. The front axle 112 are attached to the base frame 111. The rear axle 113 is attached to a transmission case (a part of the power transmission portion 4) supported by the base frame 111. Here, the base frame 111 also supports the engine 3 and the radiator 7 described above.

The driving compartment 12 is a portion of the vehicle body 1 where a driver (operator) sits, and is provided behind the engine 3. The driving compartment 12 is provided above the power transmission portion 4. In the present embodiment, the driving compartment 12 has an internal space (room-shaped space) in which the driver sits. In the present embodiment, the driving compartment 12 is so-called a cabin. The driving compartment 12 of the tractor 100 may have a configuration other than the cabin. That is, the configuration of the driving compartment 12 of the tractor 100 may not be a room-type space and may be exposed to the outside. The configuration may be provided with a canopy.

A seat portion 121, a steering portion 122, and a dashboard portion 123 are provided inside the cabin 12.

The seat portion 121 is a place where a driver of the tractor 100 sits. The steering portion 122 constitutes a device for the driver sitting on the seat portion 121 to steer the tractor 100. The steering portion 122 comprises, in detail, a steering wheel 122a and a steering column 122b. The steering wheel 122a is a portion steered by the driver, and is formed in a circular shape. The steering wheel 122a is rotatably supported by a steering shaft (not illustrated) disposed inside the steering column 122b disposed below the steering wheel 122a. The orientation of the front wheels 2a can be changed by rotating the steering wheel 122a.

The dashboard portion 123 is provided in a front portion of the cabin 12. A meter panel (instrument panel) for visualizing values measured by various instruments including the speed of the tractor 100, and various levers, switches, etc. for performing operation including steering of the tractor 100 are disposed in the dashboard portion 123.

In addition, a lever, a pedal, etc. (none of which is illustrated) for operating the tractor 100 itself, a work machine (not illustrated) attached to the rear of the tractor 100 are disposed around the seat portion 121 inside the cabin 12.

Further, a work machine connection portion 8 configured by, for example, a three-point link mechanism, or the like is provided at the rear portion of the vehicle body 1. The work machine connection portion 8 is provided so as to be attachable to and detachable from the work machine. The number of types of work machines that can be attached to the work machine connection portion 8 may be only one, but is preferably two or more. The work machine includes, for example, a tilling device, a plow, a fertilizing device, an agricultural chemical spraying device, a harvesting device, or a reaping device etc. The power generated by the engine 3 can be transmitted to the work machine via a power take-off shaft (PTO shaft; not illustrated) extending from the power transmission portion 4 toward the rear of the vehicle body 1. That is, the work machine can be operated by the engine 3. Here, the work machine may be driven by a driving device (for example, a motor) other than the engine 3.

In the present embodiment, a counterweight 9 is provided at a front end portion of the base frame 111. The counterweight 9 is provided to achieve a weight balance with the work machine attached to the work machine connection portion 8.

### <2. Hood>

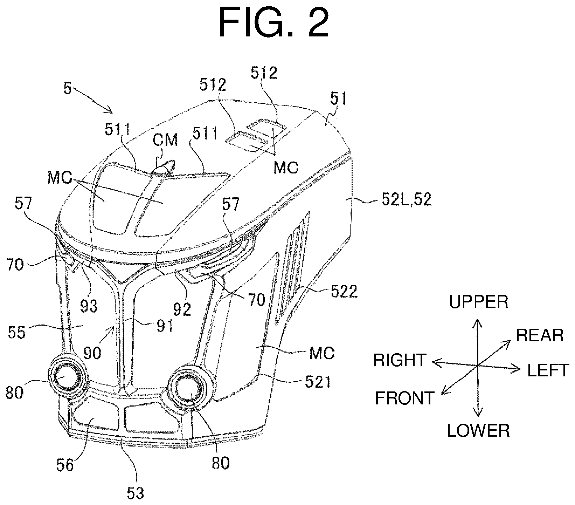

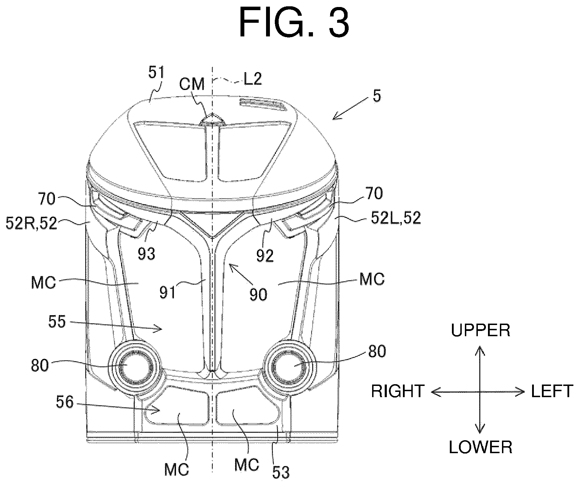

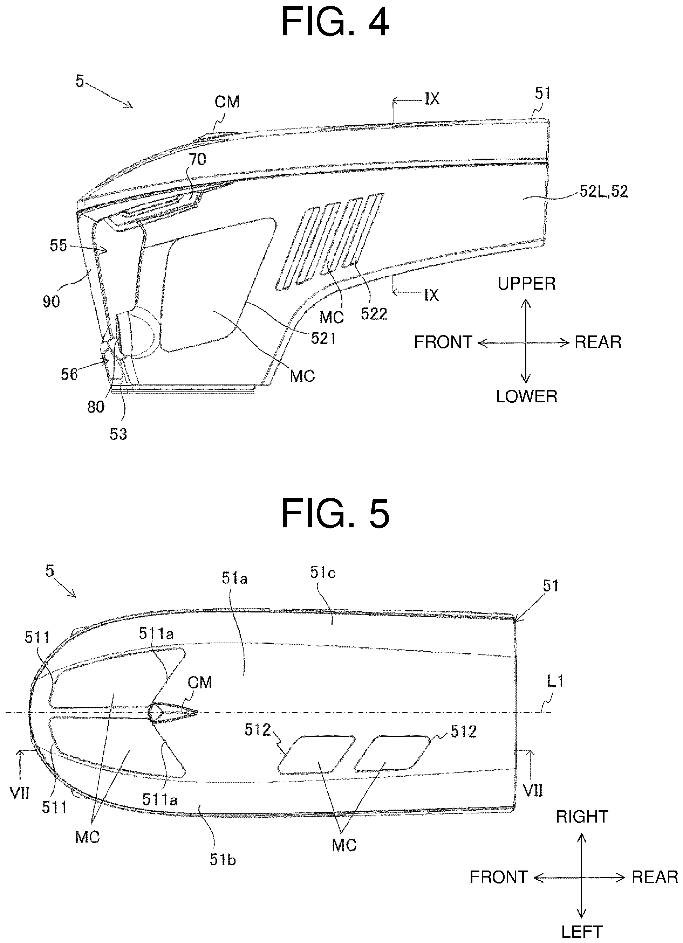

As described above, the tractor 100 comprises the hood 5. The hood 5 is disposed on the front side of the tractor 100, specifically, disposed in front of the cabin 12. FIG. 2 is a perspective view showing a schematic configuration of the hood 5 according to the embodiment of the present invention. FIG. 3 is a front view showing a schematic configuration of the hood 5 according to the embodiment of the present invention. FIG. 4 is a left side view showing a schematic configuration of the hood 5 according to the embodiment of the present invention. FIG. 5 is a plan view showing a schematic configuration of the hood 5 according to the embodiment of the present invention.

The hood 5 has a longitudinal direction as a front-rear direction and has a function as a cover that covers the engine 3 etc. The hood 5 constitutes so-called engine room. The hood 5 is provided to be able to rotate upward about, for example, a front end portion or a rear end portion as a fulcrum, and to expose the engine 3 to the outside.

As illustrated in FIGS. 2 to 5, the hood 5 is mainly composed of an upper hood member 51, a side hood member 52, and a front hood member 53. That is, the hood 5 is configured by using a plurality of hood members 51 to 53. The hood 5 is composed of a plurality of parts and has a dividable structure. The plurality of hood members 51 to 53 are not intended to limit the material thereof, but are made of, for example, a resin.

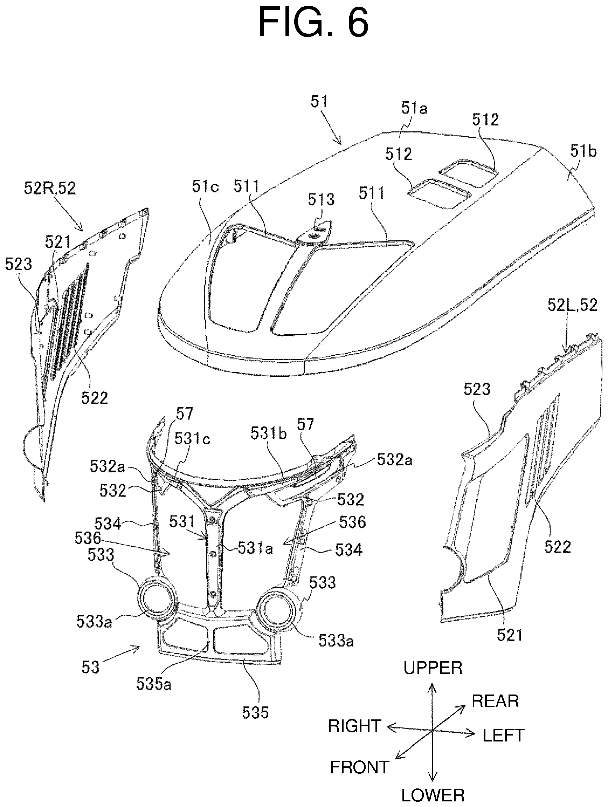

FIG. 6 is a schematic perspective view showing the plurality of hood members 51 to 53 constituting the hood 5 in an exploded manner. As illustrated in FIG. 6, the side hood member 52 specifically comprises a left hood member 52L and a right hood member 52R, that are separate members.

### [2-1. Upper Hood Member]

The upper hood member 51 is an exterior component that constitutes an upper portion of the hood 5. As illustrated in FIGS. 5 and 6, the upper hood member 51 comprises an upper surface portion 51a, and a left side portion 51b and a right side portion 51c that are disposed on the left and right of the upper surface portion 51a. The upper surface portion 51a has a substantially rectangular shape in plan view, but has a tapered structure in which the width of the front portion in the left-right direction decreases toward the front. The upper surface portion 51a extends substantially in the horizontal direction, but has a curved structure (inclined structure) in which the front portion extends downward toward the front.

The left side portion 51b and the right side portion 51c are disposed symmetrically with respect to the upper surface portion 51a. The left side portion 51b is adjacently disposed such that the right end thereof extends along the left end of the upper surface portion 51a. The left side portion 51b has a curved structure (inclined structure) that is curved downward from the right end toward the left end. Also, the front portion of the left side portion 51b has a tapered structure in which the left end approaches the right end toward the front. The right side portion 51c is adjacently disposed such that the left end thereof extends along the right end of the upper surface portion 51a. The right side portion 51c has a curved structure (inclined structure) that extends downward from the left end toward the right end. Also, the front portion of the right side portion 51c has a tapered structure in which the right end approaches the left end toward the front.

A pair of upper surface front opening portions 511 arranged at an interval in the left-right direction is provided on the front side of the upper surface portion 51a. Each of the pair of upper surface front opening portions 511 has a trapezoidal shape in plan view. The pair of upper surface front opening portions 511 are disposed symmetrically with respect to a bisecting line L1 (see FIG. 5) that bisects the upper hood member 51 in the left-right direction in plan view. A pair of upper surface rear opening portions 512 arranged at an interval in the front-rear direction is provided in a rear left portion of the upper surface portion 51a. Each of the pair of upper surface rear opening portions 512 has a rhombus shape in plan view. The upper surface front opening portion 511 and the upper surface rear opening portion 512 pass through the upper surface portion 51a in the up-down direction and are used as vent holes.

As illustrated in FIG. 5 etc., the upper surface front opening portion 511 and the upper surface rear opening portion 512 are covered with a mesh cover MC from the lower surface side of the upper surface portion 51a. By providing the mesh cover MC, it is possible to prevent foreign matter from entering the inside of the hood 5 without impairing the function as a vent hole. In the present embodiment, the upper surface front opening portion 511 and the upper surface rear opening portion 512 are provided only in the upper surface portion 51a, and are not provided over the left side portion 51b and the right side portion 51c that are inclined with respect to the upper surface portion 51a. With such a configuration, the molding of the upper hood member 51 comprising the opening portions 511 and 512 can be prevented from becoming complicated, and the mesh cover MC can be easily attached.

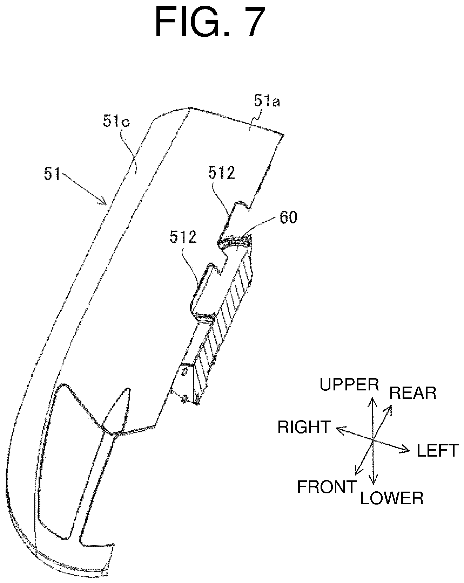

FIG. 7 is a schematic view showing a relationship between the upper hood member 51 and the exhaust gas purification device 60. FIG. 7 is a perspective view showing a cross section when the hood 5 is cut at a VII-VII position illustrated in FIG. 5. Here, the exhaust gas purification device 60 is a device that is disposed in an upper portion of the engine 3 and purifies exhaust gas from the engine 3. The exhaust gas purification device 60 is, specifically, a diesel particulate filter (DPF). The exhaust gas purification device 60 is disposed at a position covered with the hood 5, similarly to the engine 3.

As can be seen from FIG. 7, the hood 5 is disposed to cover the exhaust gas purification device 60 and has an upper surface opening portion 512 at a position overlapping the exhaust gas purification device 60 in a plan view. Specifically, the upper surface opening portion 512 is the above-described upper surface rear opening portion 512. By the upper surface rear opening portion 512 being provided above the exhaust gas purification device 60, the heat warmed by the exhaust gas purification device 60, the engine 3, etc. can be efficiently discharged.

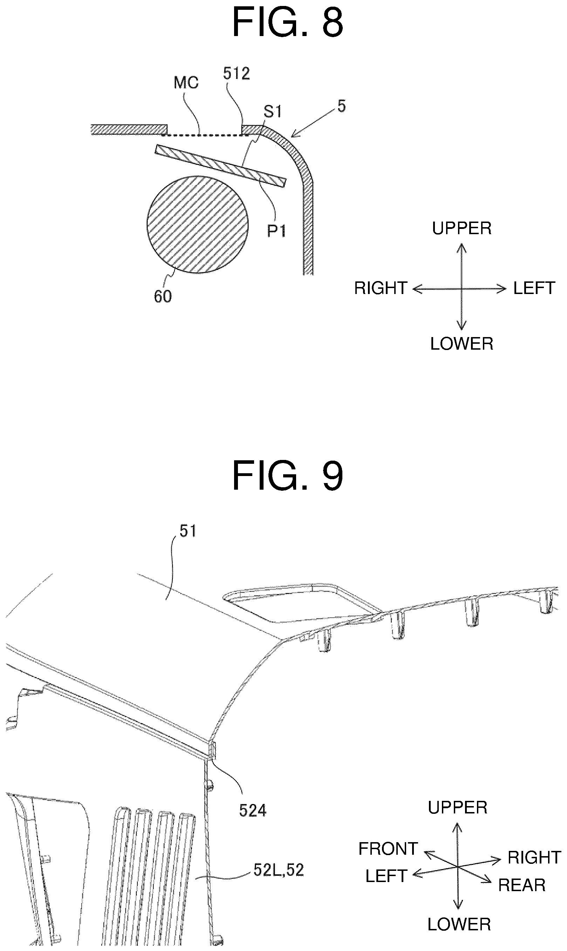

However, when the exhaust gas purification device 60 is present directly below the upper surface rear opening portion 512, water such as rainwater may be applied to the exhaust gas purification device 60. Since the exhaust gas purification device 60 reaches a high temperature, when water such as rainwater is applied to the exhaust gas purification device 60, generation of steam etc. may occur. In consideration of such a point, the configuration illustrated in FIG. 8 is adopted as a preferable form in the present embodiment.

FIG. 8 is a diagram schematically showing a configuration of the periphery of the exhaust gas purification device 60. As illustrated in FIG. 8, the tractor 100 of the present embodiment comprises a partition portion P1 between the upper surface rear opening portion (upper surface opening portion) 512 and the exhaust gas purification device 60 (between the up-down direction). By the partition portion P1 being provided, water that has entered the inside of the hood 5 from the upper surface rear opening portion 512 can be prevented from being applied to the exhaust gas purification device 60.

The partition portion P1 is disposed inside the hood 5. The partition portion P1 is provided on, for example, the hood 5. The partition portion P1 may be formed of the same member as the hood 5, or may be formed as a separate member and attached to the hood 5. However, the partition portion P1 may be provided in another member that is disposed at a position covered with the hood 5, instead of being provided in the hood 5.

In the example illustrated in FIG. 8, the partition portion P1 has, on its upper surface, an inclined surface S1 whose height position decreases from the center side in the left-right direction toward the outer side (specifically, the left side) in the left-right direction of the hood 5. Therefore, the water that has entered the hood 5 from the upper surface rear opening portion 512 and splashed on the partition portion P1 is carried to the outer end in the left-right direction in the internal space of the hood 5 along the inclined surface S1 and is discharged to the outside without splashing on the exhaust gas purification device 60.

As illustrated in FIG. 6, the upper hood member 51 is provided with a center mark attachment portion 513 in addition to the opening portions 511 and 512 described above. As illustrated in FIG. 5 etc., a triangular rod-shaped center mark CM is attached to the center mark attachment portion 513. The center mark CM is used as a sighting device for the operator who drives the tractor 100 to determine the traveling direction.

Specifically, the center mark attachment portion 513 is disposed on a bisecting line L1 that bisects the upper hood member 51 in the left-right direction in plan view, and between rear edge portions 511a of the left and right upper surface front opening portions 511 (between the left-right direction). The center mark CM attached to the center mark attachment portion 513 provided at such a position is easily visually recognized by the operator who drives the tractor 100, and can be used as a mark for causing the tractor 100 to precisely travel straight. The center mark CM is attached to the center mark attachment portion 513 by using, for example, a push nut. The center mark CM may be the same member as the upper hood member 51. That is, the center mark CM may be formed integrally with the upper hood member 51.

### [2-2. Side Hood Member]

The left hood member 52L is an exterior component that constitutes a left portion of the hood 5. The right hood member 52R is an exterior component that constitutes a right portion of the hood 5. The left hood member 52L and the right hood member 52R are disposed symmetrically with respect to the upper hood member 51. The left hood member 52L has an upper edge portion that is disposed along a left edge portion of the upper hood member 51. The right hood member 52R has an upper edge portion that is disposed along a right edge portion of the upper hood member 51. The left hood member 52L and the right hood member 52R extend from a rear end portion of the upper hood member 51 to a position in front of a front end portion of the upper hood member 51. The left hood member 52L and the right hood member 52R have a shape obtained by turning an L shape sideways in a side view (see FIG. 4 etc.) and extend substantially in the up-down direction. However, the left hood member 52L and the right hood member 52R have a curved front portion. Specifically, the left hood member 52L has a curved structure in which a front portion of the left hood member 52L extends toward the right side as the front portion extends toward the front. Also, the right hood member 52R has a curved structure in which a front portion of the right hood member 52R extends toward the left side as the front portion extends toward the front.

As illustrated in FIG. 6, the left hood member 52L and the right hood member 52R are provided with a first side surface opening portion 521, a second side surface opening portion 522, and a side surface cutout portion 523. The configurations of the first side surface opening portion 521, the second side surface opening portion 522, and the side surface cutout portion 523 are the same in the left hood member 52L and the right hood member 52R.

The first side surface opening portion 521 is provided in a front portion having a curved structure in the left hood member 52L and the right hood member 52R. As illustrated in FIG. 4, the first side surface opening portion 521 has a trapezoidal shape in side view. The first side surface opening portion 521 passes through the left hood member 52L or the right hood member 52R in the left-right direction and is used as a vent hole. As illustrated in FIG. 4 etc., the first side surface opening portion 521 is covered with a mesh cover MC from the inner surface side of the left hood member 52L or the right hood member 52R. By providing the mesh cover MC, it is possible to prevent foreign matter from entering the inside of the hood 5 without impairing the function as a vent hole.

The second side surface opening portion 522 is provided behind the first side surface opening portion 521 in the left hood member 52L and the right hood member 52R. As illustrated in FIG. 4, the second side surface opening portion 522 has a parallelogram shape in side view. The second side surface opening portion 522 passes through the left hood member 52L or the right hood member 52R in an oblique direction inclined in the front-rear direction with respect to the left-right direction and is used as a vent hole. Here, in the left hood member 52L, the second side surface opening portion 522 passes through the left hood member 52L obliquely from the left rear side toward the right front side. In the right hood member 52R, the second side surface opening portion 522 passes through the right hood member 52R obliquely from the right rear side toward the left front side. Similarly to the first side surface opening portion 521, the second side surface opening portion 522 is also covered with the mesh cover MC from the inner surface side (see FIG. 4 etc.).

Specifically, the second side surface opening portion 522 is disposed at a position behind the fan shroud that surrounds the above-described cooling fan 6 (refer to FIG. 1). That is, the second side surface opening portion 522 is provided for the purpose of exhausting heat in the hood 5. By providing the second side surface opening portion 522, the amount of heat transferred to the cabin 12 can be reduced. By providing the second side surface opening portion 522, it is possible to prevent the function of the air conditioner provided in the cabin 12 from being inhibited.

More specifically, the plurality of second side surface opening portions 522 are arranged in the front-rear direction. That is, in the present embodiment, the hood 5 has, on the side surface, a plurality of side surface opening portions 522 having the same shape and arranged in the front-rear direction. When the plurality of side surface opening portions (second side surface opening portions) 522 having the same shape are provided as described above, the exhaust flow rate can be adjusted by adjusting the usage state of the side surface opening portions 522, and, for example, the amount of heat transferred to the cabin 12 can be adjusted.

The adjustment of the use states of the plurality of second side surface opening portions 522 may be performed manually or automatically. The manual adjustment of the usage state can be achieved by, for example, attaching a lid member to some of the plurality of second side surface opening portions 522 to close the lid member. While, the automatic adjustment of the usage state can be achieved by, for example, automatically opening and closing the second side surface opening portion 522 by moving the above-described lid member with a motor etc.

The side surface cutout portion 523 is provided on the front side of the upper edge portion of the left hood member 52L and the right hood member 52R. That is, the side surface cutout portion 523 is provided in a curved structure portion on the front side of the left hood member 52L and the right hood member 52R. In the left hood member 52L and the right hood member 52R, the height position of the upper end of a portion where the side surface cutout portion 523 is provided is lower than that of a portion where the side surface cutout portion 523 is not provided. In a portion where the side surface cutout portion 523 is not provided, the upper hood member 51 and the left hood member 52L are combined in contact with each other, and the upper hood member 51 and the right hood member 52R are combined in contact with each other. In the portion where the side surface cutout portion 523 is provided, a gap is formed between the upper hood member 51 and the left hood member 52L and between the upper hood member 51 and the right hood member 52R in a state where the upper hood member 51 and the right hood member inner wall are combined with each other. An upper light portion 70 (refer to FIG. 2 etc.) described below that is attached to the front hood member 53 etc. are disposed in the gap.

### [2-3. Front Hood Member]

The front hood member 53 is an exterior component that constitutes a front portion of the hood 5. As illustrated in FIG. 6, the front hood member 53 comprises a central frame portion 531, a pair of left and right upper light attachment portions 532, a pair of left and right lower light attachment portions 533, a pair of left and right connecting frame portions 534, and a lower frame portion 535.

The central frame portion 531 has a T-shape in a front view. The central frame portion 531 has, in detail, a base portion 531a that extends in the up-down direction, a left curved portion 531b that extends leftward from the base portion 531a, and a right curved portion 531c that extends rightward from the base portion 531a. The base portion 531a has an upper end portion having a wide width in the left-right direction, and a linear portion having a narrower width in the left-right direction than the upper end portion and extending linearly downward from the upper end portion. The base portion 531a has a structure that is line-symmetric with respect to a bisector L2 (see FIG. 3) that bisects the hood 5 in the left-right direction in a front view. The left curved portion 531b has an arc shape that extends backward from the base portion 531a toward the left side. The right curved portion 531c has an arc shape that extends backward from the base portion 531a toward the right side. The left curved portion 531b and the right curved portion 531c are disposed symmetrically with respect to the base portion 531a.

As illustrated in FIG. 3 etc., the decorative body 90 having a Y shape in a front view is attached to the central frame portion 531. The decorative body 90 is specifically composed of three members 91, 92, and 93. The first decorative member 91 is a Y-shaped component and is attached to the front surface side of the base portion 531a. The second decorative member 92 is a component that extends the length of the left side upper portion of the first decorative member 91 which is a Y-shaped component, and is attached to the front surface side of the left curved portion 531b. The third decorative member 93 is a component that extends the length of the right upper portion of the first decorative member 91 which is a Y-shaped component, and is attached to the front surface side of the right curved portion 531c. By placing the decorative body 90 on the front hood member 53, for example, a strong impression can be given to a third party. Since the decorative body 90 has a three divided structure, the size of the component can be reduced, and the component can be easily handled during attachment work etc.

Of the pair of left and right upper light attachment portions 532, the upper light attachment portion 532 on the left side is provided along the lower edge of the left curved portion 531b, and the upper light attachment portion 532 on the right side is provided along the lower edge of the right curved portion 531c. Each upper light attachment portion 532 has an upper light opening portion 532a having a rectangular shape in side view. The upper light opening portion 532a is a through hole that passes through in the left-right direction. A component (light unit) constituting the upper light portion 70 (refer to FIG. 2 etc.) is disposed in the upper light opening portion 532a. The upper light portion 70 is configured as a decorative light portion in the tractor 100. The decorative light portion composed of the upper light portion 70 will be described in detail below.

Of the pair of left and right lower light attachment portions 533, the lower light attachment portion 533 on the left side is disposed below and apart from the upper light attachment portion 532 on the left side. The lower light attachment portion 533 on the left side and the upper light attachment portion 532 on the left side are connected to each other by, of the pair of left and right connection frame portions 534, the connection frame portion 534 disposed on the left side. Of the pair of left and right lower light attachment portions 533, the lower light attachment portion 533 on the right side is disposed below and apart from the upper light attachment portion 532 on the right side. The lower light attachment portion 533 on the right side and the upper light attachment portion 532 on the right side are connected to each other by, of the pair of left and right connection frame portions 534, the connection frame portion 534 disposed on the right side.

Each lower light attachment portion 533 has a frame structure that forms the lower light opening portion 533a. Each lower light attachment portion 533 is formed in an annular shape, and the lower light opening portion 533a has a circular shape. A component (light unit) constituting the lower light portion 80 (refer to FIG. 2 etc.) is disposed in the lower light opening portion 533a. The lower light portion 80 is configured as a headlight (a light that is essential for driving) in the tractor 100. The light unit constituting the lower light portion 80 comprises a bulb and a reflector. The bulb is configured by using, for example, a halogen lamp, an HID lamp, or an LED lamp etc.

The lower frame portion 535 is disposed below the central frame portion 531 and the pair of lower light attachment portions 533, and is connected thereto. The lower frame portion 535 has a frame shape in a front view, and has, at a central portion in the left-right direction, a connecting piece 535a that connects upper and lower frame portions. Therefore, in other words, the lower frame portion 535 has a configuration in which two frame-shaped portions are symmetrically disposed.

The front hood member 53 is provided with the central frame portion 531, the upper light attachment portion 532, the lower light attachment portion 533, the connecting frame portion 534, and a pair of left and right front grille opening portions 536 surrounded by the lower frame portion 535. The front grille opening portion 536 passes through in the front-rear direction. As illustrated in FIG. 3 etc., a mesh cover MC is attached to the pair of left and right front grille opening portions 536 from the side (rear side) that is the inner side of the hood 5. Thus, a front grille 55 is provided in front of the hood 5.

As illustrated in FIG. 3 etc., the mesh cover MC is also attached to the lower frame portion 535 from the inner side (rear side) of the hood 5 so as to cover an opening portion of the lower frame portion 535 that passes through the lower frame portion 535 in the front-rear direction. Thus, a lower grille 56 is provided in a front lower portion of the hood 5.

As can be seen from the above, the front hood member 53 is provided with the upper light portion 70 disposed in the upper portion and the lower light portion 80 disposed in the lower portion. By the upper light portion 70 configured as a decorative light portion being provided in addition to the lower light portion 80 configured as a headlight portion, not only the front side of the tractor 100 but also the lateral sides of the tractor 100 can be made bright. Thus, the user of the tractor 100, such as the operator who drives the tractor 100, can efficiently perform work at night using the tractor 100.

When the upper light portion 70 and the lower light portion 80 are provided in the front hood member 53, the design of the front hood member 53 can be greatly changed by slightly changing the shape etc. of the light portion. That is, when the upper light portion 70 and the lower light portion 80 are provided in the front hood member 53, the design can be easily improved.

In particular, the present embodiment has a configuration in which the impression of the front surface side of the tractor 100 is likely to be influenced by the combination of the light portions 70 and 80 and the Y-shaped decorative body 90. The impression of the front side of the tractor 100 can be greatly changed by only slightly changing the relationship between the light portions 70 and 80 and the decorative body 90.

### [2-4. Others]

The upper hood member 51, the left hood member 52L, the right hood member 52R, and the front hood member 53 are connected to each other to constitute the hood 5. Specifically, some of the members are connected to each other via a framework member (not illustrated) disposed inside the hood 5, and the other members are directly connected to each other. A fastening member such as a bolt and a nut is used to connect the members.

With reference to the upper hood member 51, the left hood member 52L is disposed below the left end portion, the right hood member 52R is disposed below the right end portion, and the front hood member 53 is disposed below the front end portion. The upper hood member 51 is connected to the left hood member 52L, the right hood member 52R, and the front hood member 53. The front hood member 53 is connected to the left hood member 52L and the right hood member 52R in addition to the upper hood member 51.

FIG. 9 is a cross-sectional perspective view showing a schematic relationship between the upper hood member 51 and the left hood member 52L. The cross section illustrated in FIG. 9 is a cross section at the position IX-IX illustrated in FIG. 4. The relationship between the upper hood member 51 and the right hood member 52R is not illustrated, but is the same as the relationship between the upper hood member 51 and the left hood member 52L.

As illustrated in FIG. 9, the horizontal portion 524 that shifts the position of the outer surface (left surface) of the left hood member 52L toward the inside (right side) of the hood 5 is provided in the upper end portion of the left hood member 52L. In other words, a step is formed in the upper end portion of the left hood member 52L by the horizontal portion 524. The left end portion of the upper hood member 51 is connected to the left hood member 52L in a state of being disposed on the horizontal portion 524 forming the step. With the configuration in which the horizontal portion 524 (step) is provided for coupling, even when some manufacturing errors occur in component dimensions, the manufacturing errors can be absorbed, and the upper hood member 51 and the left hood member 52L can be easily coupled to each other.

### <3. Decorative Light Portion>

Next, the upper light portion 70 configured as a decorative light portion will be described in detail.

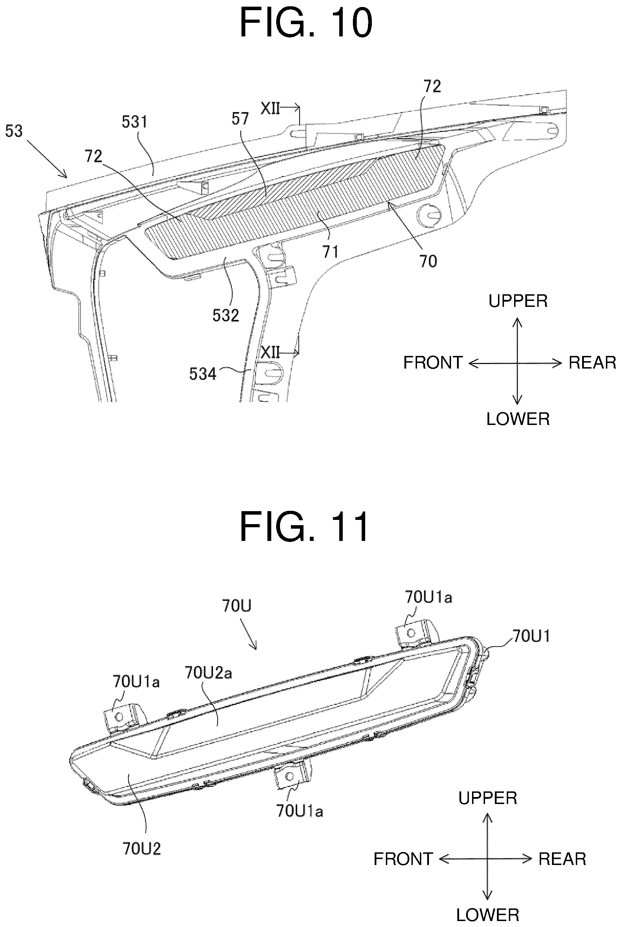

FIG. 10 is a left side view showing a schematic relationship between the front hood member 53 and the upper light portion 70. Here, FIG. 10 is an enlarged view of the upper light portion 70 and the periphery thereof. Also, FIG. 10 illustrates the upper light portion 70 on the left side among the upper light portions 70 provided on the left and right sides. Although not illustrated, the configuration of the upper light portion 70 on the right side is the same as the configuration of the upper light portion 70 on the left side.

As illustrated in FIG. 10, the upper light portion 70 has a U-shape in side view. That is, the tractor 100 comprises the light portion 70 that are disposed on the left and right sides of the front side of the hood 5 and have a U-shaped side view. In the case of a configuration in which such a light portion 70 (upper light portion 70) having a U-shaped side view is provided, the width of the light portion can be prevented from becoming too narrow, and the light emission range can be suppressed as compared with the case of a configuration in which a light portion having a rectangular shape in side view having the same width is provided. That is, with the configuration of the present embodiment, it is possible to prevent the pedestrian or the like from causing light damage such as feeling that the light is too bright while preventing the presence of the decorative light in the tractor 100 from being weakened.

Specifically, the upper light portion 70 has the following configuration, and constitutes a light portion having a U-shaped side view. In side view, the upper light portion 70 has a long side portion 71 that extends from the front side toward the rear side, and a pair of short side portions 72 that extend upward from front and rear end portions of the long side portion 71.

Since the upper light portion 70 has the long side portion 71 extending in the front-rear direction in side view, the tractor 100 has a configuration in which a light extending in the front-rear direction is provided on the front side of a side surface portion of the tractor 100. Therefore, the tractor 100 can simultaneously irradiate the front and the side by using the upper light portion 70. As a result, the workability of the worker who performs nighttime work using the tractor 100 can be improved.

Specifically, the long side portion 71 is disposed to be inclined with respect to the front-rear direction in side view, and the height thereof decreases from the rear side toward the front side. In other words, the light portion (upper light portion 70) having a U-shaped side view is inclined in a state where the front side is located below and the rear side is located above. When the upper light portion 70 has such an inclined structure, the design property due to the combination with the Y-shaped decorative body 90 can be improved. By adopting such an inclined shape, the irradiation range can be adjusted to an appropriate position.

FIG. 11 is a left side view showing a schematic configuration of the light unit 70U constituting the upper light portion 70. The same light unit 70U is used in the upper light portion 70 on the left side and the upper light portion 70 on the right side. That is, the light unit 70U is a component that can be used for both the left and right upper light portions 70. The light unit 70U is attached to the upper light opening portion 532a (refer to FIG. 6) of the upper light attachment portion 532 on the left side, to constitute the upper light portion 70 on the left side. The light unit 70U is attached to the upper light opening portion 532a (refer to FIG. 6) of the upper light attachment portion 532 on the right side, to constitute the upper light portion 70 on the right side.

As illustrated in FIG. 11, the light unit 70U comprises a housing 70U1 and a lens 70U2. The housing 70U1 is made of, for example, plastic or metal, and has a box shape having an opening outward in the left-right direction. A light emitting element and a reflector (not illustrated) are disposed inside the housing 70U1. The housing 70U1 is provided with an attachment portion 70U1a for attaching the light unit 70U to the upper light attachment portion 532. In the present embodiment, as an example, the housing 70U1 is provided with three attachment portion 70U1a.

The lens 70U2 is made of, for example, a transparent member such as plastic or glass, and covers the light emitting elements and the reflector disposed inside the housing 70U1. The lens 70U2 has a cutout portion 70U2a on a surface on an outer side in the left-right direction. By the cutout portion 70U2a being provided, the outer surface of the lens 70U2 in the left-right direction has a U-shape.

In the present embodiment, the light emitting elements disposed inside the housing 70U1 are LED elements. Specifically, the plurality of LED elements are disposed in the housing 70U1, and the plurality of LED elements are disposed in a direction in which the long side portion 71 (refer to FIG. 10) extends.

In the present embodiment, the plurality of LED elements are of the same type, but this is an example, and at least some of the plurality of types of LED elements may be of a different type from the other LED elements. That is, the upper light portion 70 may be configured to have a plurality of types of light emitting elements (specific examples comprise LED elements) having different functions. For example, the plurality of types of light emitting elements may be different from each other in at least any one of light emission intensity, color, and directivity. With the configuration in which the plurality of types of light emitting elements are provided as described above, in the upper light portion 70 extending in the front-rear direction, the upper light portion 70 can be caused to emit light by appropriately adjusting the light amount, the light color, the directivity etc. in accordance with the position in the front-rear direction.

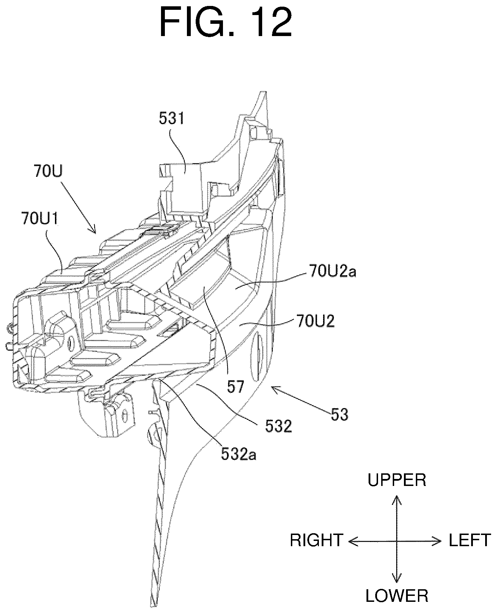

FIG. 12 is a perspective view showing a schematic configuration of a cross section taken at a position XII-XII in FIG. 10. As illustrated in FIGS. 10 and 12, the light portion (upper light portion) 70 having a U-shaped side view is configured by covering a portion of the light unit 70U with the light shielding portion 57. In other words, since a part of the light unit 70U is covered with the light shielding portion 57, the upper light portion 70 composed of the light unit 70U has a U-shaped side view.

The light shielding portion 57 shields light emitted by the light unit 70U without transmitting the light. Specifically, the light shielding portion 57 is composed of a black colored member. The light shielding portion 57 may have a light shielding property, and may be composed of a member having a color other than black. The light shielding portion 57 is disposed on a cutout portion 70U2a disposed on a lens 70U2 of a light unit 70U, and covers a part of the light unit 70U.

In the present embodiment, the light shielding portion 57 is a portion of a front hood member 53 constituting a front portion of the hood 5. The light shielding portion 57 is provided as a portion of the front hood member 53, and is disposed to cover the upper light opening portion 532a provided in the upper light attachment portion 532 in a side view. By providing the light shielding portion 57 as a part of the front hood member 53, an increase in the number of components can be prevented despite the provision of the light shielding portion 57.

Here, the light shielding portion 57 may be a part of a member attached to the front hood member 53. For example, the light shielding portion 57 may be a part of the decorative body 90. Specifically, the light shielding portion 57 may be a portion of the second decorative member 92 or the third decorative member 93 constituting the decorative body 90. The light shielding portion 57 may be a separate member from the front hood member 53 and the decorative body 90. In such a configuration in which the light shielding portion 57 is a separate member, the light shielding portion 57 may be movable. Since the light shielding portion 57 is movable, the amount and direction of light emitted from the upper light portion 70 can be appropriately adjusted.

Also, the present embodiment comprises the decorative members 92 and 93 that are disposed above the upper light portion 70 on the left and right sides of the front side of the hood 5 (see FIG. 2). In a side view, the decorative members 92 and 93 extend at least over a range from the front end to the rear end of the upper light portion 70. Specifically, the decorative members 92 and 93 extend over a wider range on the front end side and the rear end side than the range from the front end to the rear end of the upper light portion 70. By providing such decorative members 92 and 93, the irradiation of the light emitted by the upper light portion 70 toward the upper side can be blocked not only by the light shielding portion 57 but also by the decorative members 92 and 93. To obtain such a function, the decorative members 92 and 93 may be composed of a light-shielding member, and may protrude outward in the left-right direction with respect to the upper light portion 70.

### <4. Notes etc.>

The various technical features disclosed in the present specification can be modified in various ways without departing from the gist of the technical creation thereof. In addition, the plurality of embodiments, examples, and modifications described in the present specification may be combined to the extent possible.

### <5. Supplementary Notes>

The following supplementary notes are further disclosed in relation to the embodiment, the examples, and the modifications described above.

The exemplary work vehicle of the present invention may have a configuration (first configuration) comprising a hood, light portions each having a U-shaped side view and disposed on each of left and right sides of a front side of the hood.

The work vehicle having the first configuration may have a configuration (second configuration) in which the light portion has a long side portion that extends from a front side toward a rear side, and a pair of short side portions that extend upward from front and rear end portions of the long side portion in a side view.

The work vehicle having the second configuration may have a configuration (third configuration) in which the long side portion is disposed to be inclined with respect to a front-rear direction in a side view, and has a height that decreases from a rear side toward a front side.

The work vehicle having any one of the first to third configurations may have a configuration (fourth configuration) in which the light portion is configured by covering a part of a light unit with a light shielding portion.

The work vehicle having the fourth configuration may have a configuration (fifth configuration) in which the light shielding portion is a front hood member constituting a front portion of the hood, or a portion of a member attached to the front hood member.

The work vehicle having the fourth configuration may have a configuration (sixth configuration) in which the light shielding portion is movable.

The work vehicle having any one of the first to sixth configurations may have a configuration (seventh configuration) in which it comprise a decorative member that is disposed above the light portion on each of left and right sides of a front side of the hood, and the decorative member extends at least over a range from a front end to a rear end of the light portion in a side view.

The work vehicle having any one of the first to seventh configurations may have a configuration (eighth configuration) in which the hood is disposed to cover an exhaust gas purification device, and has an upper surface opening portion at a position overlapping the exhaust gas purification device in a plan view.

The work vehicle having the eighth configuration may have a configuration (ninth configuration) in which it comprises a partition portion disposed between the upper surface opening portion and the exhaust gas purification device.

The work vehicle having any one of the first to ninth configurations may have a configuration (tenth configuration) in which the hood has, on a side surface thereof, a plurality of side surface opening portions having the same shape and arranged in a front-rear direction.

The work vehicle having any one of the first to tenth configurations may have a configuration (eleventh configuration) in which the hood is configured by using a plurality of hood members, the plurality of hood members comprise a front hood member that constitutes a front portion of the hood, and the front hood member is provided with an upper light portion that is disposed in an upper portion and constitutes the light portion and a lower light portion that is disposed in a lower portion.

The work vehicle having any one of the first to eleventh configurations may have a configuration (twelfth configuration) in which the light portion has a plurality of types of light emitting elements having different functions.

### REFERENCE SIGNS LIST

5: HOOD
51: UPPER HOOD MEMBER
52: SIDE HOOD MEMBER
52L: LEFT HOOD MEMBER
52R: RIGHT HOOD MEMBER
53: FRONT HOOD MEMBER
57: LIGHT SHIELDING PORTION
60: EXHAUST GAS PURIFICATION DEVICE
70: UPPER LIGHT PORTION (LIGHT PORTION)
71: LONG SIDE PORTION
72: SHORT SIDE PORTION
80: LOWER LIGHT PORTION
90: DECORATIVE BODY
91: FIRST DECORATIVE MEMBER
92: SECOND DECORATIVE MEMBER
93: THIRD DECORATIVE MEMBER
100: TRACTOR (WORK VEHICLE)
512: UPPER SURFACE REAR OPENING PORTION (UPPER SURFACE OPENING PORTION)
522: SECOND SIDE SURFACE OPENING PORTION (SIDE SURFACE OPENING PORTION)
P1: PARTITION PORTION

## Claims

1. A work vehicle comprising
a hood, and
light portions respectively disposed on left and right sides of a front side of the hood, the light portions each having a U-shaped side view.

2. The work vehicle according to claim 1, wherein the light portions each have, in a side view:
a long side portion extending from the front side toward a rear side; and
a pair of short side portions extending upward from respective front and rear end portions of the long side portion.

3. The work vehicle according to claim 2, wherein the long side portion is, in a side view, disposed to be inclined with respect to a front-rear direction, and a height of the long side portion decreases from a rear side toward a front side.

4. The work vehicle according to any one of claims 1 to 3, wherein the light portions are each configured by covering a part of a light unit with a light shielding portion.

5. The work vehicle according to claim 4, wherein the light shielding portion is a part of a front hood member constituting a front portion of the hood or a part of a member attached to the front hood member.

6. The work vehicle according to claim 4, wherein the light shielding portion is movable.

7. The work vehicle according to any one of claims 1 to 3, comprising decorative members respectively disposed above the light portions on the left and right sides of the front side of the hood,
wherein, in a side view, each of the decorative members extends at least over a range from a front end to a rear end of the corresponding light portion.

8. The work vehicle according to any one of claims 1 to 3, wherein the hood is disposed to cover an exhaust gas purification device, and, in a plan view, has an upper surface opening portion at a position overlapping the exhaust gas purification device.

9. The work vehicle according to claim 8, comprising a partition portion disposed between the upper surface opening portion and the exhaust gas purification device.

10. The work vehicle according to any one of claims 1 to 3, wherein the hood has, on a side surface thereof, a plurality of side surface opening portions having a same shape and being arranged in a front-rear direction.

11. The work vehicle according to any one of claims 1 to 3, wherein the hood is configured using a plurality of hood members,
the plurality of hood members include a front hood member that constitutes a front portion of the hood,
and the front hood member includes:
an upper light portion that is disposed in an upper portion and constitutes the light portions,
a lower light portion that is provided in a lower portion.

12. The work vehicle according to any one of claims 1 to 3, wherein the light portions include a plurality of types of light emitting elements each having different function.
